# EUROPEAN PATENT APPLICATION

(11) **EP 4 822 964 A1**
(43) Date of publication of application: **14.10.2026**
(21) Application number: 25741825.1
(22) Date of filing: 07.01.2025
(51) Int. Cl.: H02K 33/12

(54) **VIBRATION MOTOR**

(30) Priority: 16.01.2024 JP 2024004502
(71) Applicant: Murata Manufacturing Co., Ltd., Nagaokakyo-shi, Kyoto 617-8555 (JP)
(72) Inventor: TAKATA, Kazuhide, Nagaokakyo-shi, Kyoto 617-8555 (JP); KURITA, Takeshi, Nagaokakyo-shi, Kyoto 617-8555 (JP); FUJIOKA, Keiji, Nagaokakyo-shi, Kyoto 617-8555 (JP)
(74) Representative: Stöckeler, Ferdinand
(86) International application number: PCT/JP2025/000202
(87) International publication number: WO 2025/154580

(57) **Abstract**

A vibration motor (10) includes one mover magnet (40), a tubular holder (30), drive windings (61, 62), a tubular case (20), and two stator magnets (51, 52). The tubular holder (30) has a through hole (300) having both end portions open, the mover magnet (40) is housed in the through hole (300), and the tubular holder (30) has a flange portion (32) at a central portion of an outer side surface thereof. The drive windings (61, 62) are wound on both sides of the flange portion (32) on an outer periphery of the tubular holder (30). The tubular case (20) accommodates the tubular holder (30) and the drive windings (61, 62). The two stator magnets (51, 52) are disposed at respective ends of the tubular holder (30) with the mover magnet (40) interposed therebetween so as to generate magnetic forces repelling the mover magnet (40), in a first direction which is a movable direction of the mover magnet (40). At least a part of each of the two stator magnets (51, 52) is housed in the tubular holder (30). The tubular case (20) includes stepped portions facing the respective end portions of the tubular holder (30). The tubular holder (30) is disposed in the tubular case (20) in a state in which the end portions are in contact with side surfaces of the respective stepped portions in a radial direction of the through hole.

## Description

### Technical Field

The present invention relates to a structure of a vibration motor.

### Background Art

Patent Document 1 describes a resonance motor. The resonance motor includes a housing, stator magnets, and a mover magnet. The mover magnet is housed in the housing. The stator magnets are disposed at both ends of the housing.

In a motor having such a configuration, in order to increase acceleration of the mover magnet within limited dimensions, a configuration can be considered in which a drive coil disposed on an outer surface of the housing is brought as close as possible to the mover magnet.

In the configuration of Patent Document 1, the mover magnet has a configuration in which two permanent magnets are used and the two permanent magnets are bonded with an adhesive in directions repelling each other with a spacer or the like interposed therebetween. In this case, a recess recessed from the outer surface is provided at a substantially central portion in a direction in which the housing extends (a vibration direction of the mover magnet), and the drive coil is disposed in the recess. Thus, the drive coil and the mover magnet are brought closer to each other.

### Citation List

### Patent Document

Patent Document 1: Japanese Unexamined Patent Application Publication No. 2014-223014

### Summary of Invention

### Technical Problem

When the configuration of Patent Document 1 is used, since two permanent magnets are used for the mover magnet, the number of components of the motor increases, and the housing becomes longer.

On the other hand, when the mover magnet is configured with one permanent magnet, it is necessary to dispose drive coils at both end portions in the direction in which the housing extends. Further, in order to bring the drive coils closer to the mover magnet, it is necessary to provide recesses at both end portions of the housing.

In this case, the end portions of the housing become thin, and mechanical strength of the end portions of the housing decreases. If the mechanical strength of the housing cannot be ensured, there is a problem in that, when the mover magnet slides, resistance is produced and acceleration conversely decreases, or noise increases.

Accordingly, an object of the present invention is to suppress enlargement of the shape while suppressing degradation of characteristics as a vibration motor and suppressing noise.

### Solution to Problem

A vibration motor of the present invention includes one mover magnet, a tubular holder, drive windings, a tubular case, and two stator magnets. The tubular holder has a through hole having both end portions open, the mover magnet is housed in the through hole, and the tubular holder has a flange portion at a central portion of an outer side surface thereof. The drive windings are wound on both sides of the flange portion on an outer periphery of the tubular holder. The tubular case accommodates the tubular holder and the drive windings. The two stator magnets are disposed at respective ends of the tubular holder with the mover magnet interposed therebetween, so as to generate magnetic forces repelling the mover magnet, respectively, in a first direction which is a movable direction of the mover magnet. At least a part of each of the two stator magnets is housed in the tubular holder. The tubular case includes stepped portions facing the respective end portions of the tubular holder. The tubular holder is disposed in the tubular case in a state in which the end portions are in contact with side surfaces of the respective stepped portions in a radial direction of the through hole.

In this configuration, the respective ends of the tubular holder accommodating the mover magnet are thin wall portions, and the drive windings are disposed on the thin wall portions. Further, the thin wall portions of the tubular holder are disposed in recesses of the tubular case. At this time, an outer side surface of each thin wall portion of the tubular holder is in contact with a side surface of the corresponding recess of the tubular case, and an inner side surface of the thin wall portion of the tubular holder is in contact with an outer peripheral surface of the corresponding stator magnet. Thus, the tubular holder is fixed to the tubular case in a state in which deformation is difficult.

### Advantageous Effects of Invention

According to the present invention, it is possible to suppress enlargement of the shape, suppress degradation of characteristics as a vibration motor, and suppress noise.

### Brief Description of Drawings

[Fig. 1] Fig. 1 is an exploded perspective view of a vibration motor according to a first embodiment.
[Fig. 2] Fig. 2 is a side sectional view of the vibration motor according to the first embodiment.
[Fig. 3] Fig. 3 is a side sectional view of the vibration motor according to the first embodiment, with a tubular case removed.
[Fig. 4] Fig. 4(A) is a plan view of a second portion of the tubular case of the vibration motor according to the first embodiment, and Fig. 4(B) is a side sectional view of the second portion.
[Fig. 5] Figs. 5(A), 5(B), 5(C), and 5(D) are side sectional views illustrating states in respective steps in an example of a method for manufacturing the vibration motor according to the first embodiment.
[Fig. 6] Fig. 6 is a side sectional view of a vibration motor according to a second embodiment.
[Fig. 7] Figs. 7(A), 7(B), 7(C), and 7(D) are side sectional views illustrating manufacturing steps of a second case member according to the second embodiment.
[Fig. 8] Fig. 8 is an exploded perspective view of a vibration motor according to a third embodiment.
[Fig. 9] Fig. 9 is a side sectional view of the vibration motor according to the third embodiment.
[Fig. 10] Figs. 10(A), 10(B), and 10(C) are plan views illustrating disposition modes of a stator magnet, a tubular holder, and a main body portion with respect to a second lid member.
[Fig. 11] Fig. 11 is an exploded perspective view of a vibration motor according to a fourth embodiment.
[Fig. 12] Fig. 12 is a side sectional view of the vibration motor according to the fourth embodiment. Description of Embodiments

### [First Embodiment]

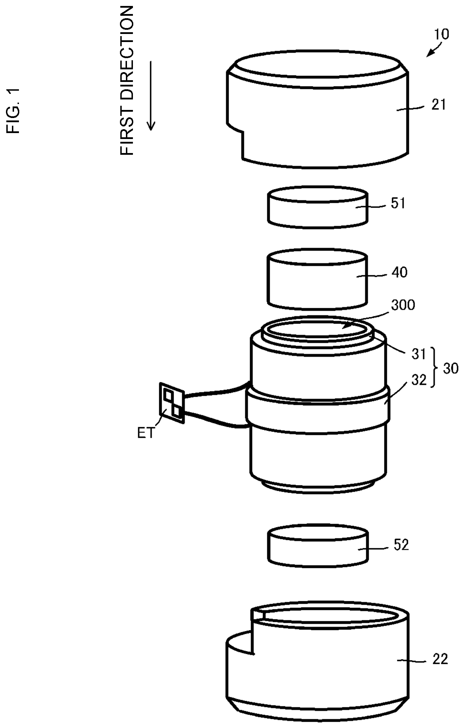

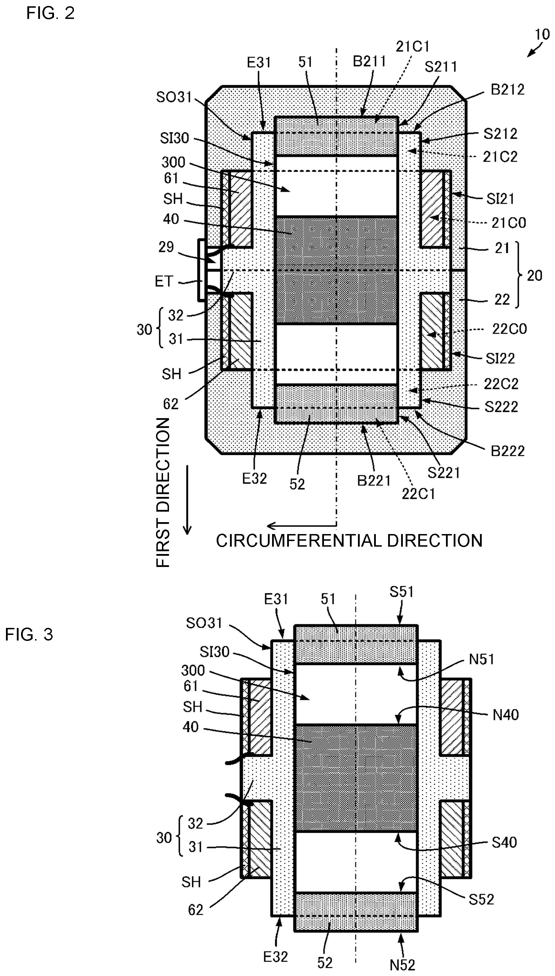

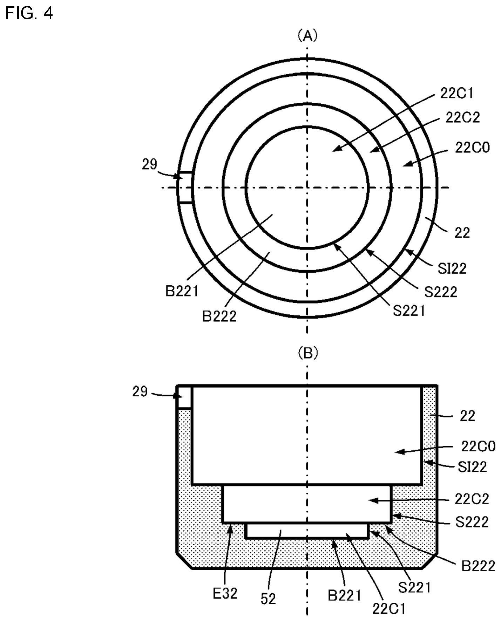

A vibration motor according to a first embodiment of the present invention will be described with reference to the drawings. Fig. 1 is an exploded perspective view of the vibration motor according to the first embodiment. Fig. 2 is a side sectional view of the vibration motor according to the first embodiment. Fig. 3 is a side sectional view of the vibration motor according to the first embodiment, with a tubular case removed. Fig. 4(A) is a plan view of a second portion of the tubular case of the vibration motor according to the first embodiment, and Fig. 4(B) is a side sectional view of the second portion.

The drawings described in each embodiment, including Fig. 1 to Fig. 4(A) and Fig. 4(B), may have portions in which dimensions are emphasized as appropriate in order to facilitate understanding of the configuration. Although the order of reference signs is not sequential, specific configurations will be described in order from the center side of a vibration motor 10.

The vibration motor 10 includes a tubular case 20, a tubular holder 30, a mover magnet 40, a plurality of stator magnets 51 and 52, and a plurality of drive windings 61 and 62.

The mover magnet 40 and the plurality of stator magnets 51 and 52 are permanent magnets, and are, for example, magnets having a strong magnetic force, such as neodymium magnets. The mover magnet 40 and the plurality of stator magnets 51 and 52 are columnar. Diameters of the mover magnet 40 and the plurality of stator magnets 51 and 52 are substantially the same.

The mover magnet 40 has an N-pole surface N40 and an S-pole surface S40. The stator magnet 51 has an N-pole surface N51 and an S-pole surface S51. The stator magnet 52 has an N-pole surface N52 and an S-pole surface S52.

The tubular holder 30 includes a main body 31 and a flange portion 32. The tubular holder 30 is made of a material that allows a magnetic field to pass therethrough, and is made of, for example, an insulating resin. The main body 31 and the flange portion 32 are integrally molded.

The main body 31 has a cylindrical shape extending in a first direction, and has a first end surface E31, a second end surface E32, an outer side surface SO31, and an inner side surface SI30. The main body 31 has a through hole 300 penetrating between the first end surface E31 and the second end surface E32. The inner side surface SI30 is formed by the through hole 300. The diameter of the through hole 300 is substantially the same as diameters of the mover magnet 40 and the plurality of stator magnets 51 and 52, within a range in which the mover magnet 40 and the plurality of stator magnets 51 and 52 can be accommodated. The through hole 300 has the same diameter at any position in the first direction.

The flange portion 32 has a cylindrical shape and protrudes outward from the outer side surface SO31 of the main body 31 in a circumferential direction. The flange portion 32 is disposed so as to include the center of the main body 31 in the first direction. Thus, the tubular holder 30 has thin wall portions on both sides of the flange portion 32 in the first direction.

The mover magnet 40 is accommodated in the through hole 300 of the tubular holder 30. At this time, the mover magnet 40 is accommodated such that the N-pole surface N40 is on the first end surface E31 side and the S-pole surface S40 is on the second end surface E32 side.

The tubular case 20 includes a first case member 21 and a second case member 22. The first case member 21 and the second case member 22 have three-dimensional shapes each extending in the first direction and having the outer peripheral surface parallel to the first direction.

The first case member 21 (three-dimensional shape portion thereof) includes a recess 21C0, a recess 21C1, and a recess 21C2.

The recess 21C0 has a shape recessed from one end surface of the first case member 21 in the first direction, and the shape of the recess 21C0 as viewed from the first direction is circular. The diameter of the recess 21C0 (the diameter of the circle as viewed from the first direction) is substantially the same as the diameter of the flange portion 32 of the tubular holder 30.

The recess 21C2 has a shape recessed from a bottom surface of the recess 21C0, and the shape of the recess 21C2 as viewed from the first direction is circular. The diameter of the recess 21C2 (the diameter of the circle as viewed from the first direction) is substantially the same as the diameter of the main body 31 (thin wall portion) of the tubular holder 30.

The recess 21C1 has a shape recessed from a bottom surface of the recess 21C2, and the shape of the recess 21C1 as viewed from the first direction is circular. The diameter of the recess 21C1 (the diameter of the circle as viewed from the first direction) is substantially the same as the diameter of the stator magnet 51.

The second case member 22 (three-dimensional shape portion thereof) includes a recess 22C0, a recess 22C1, and a recess 22C2.

The recess 22C0 has a shape recessed from one end surface of the second case member 22 in the first direction, and the shape of the recess 22C0 as viewed from the first direction is circular. The diameter of the recess 22C0 (the diameter of the circle as viewed from the first direction) is substantially the same as the diameter of the flange portion 32 of the tubular holder 30.

The recess 22C2 has a shape recessed from a bottom surface of the recess 22C0, and the shape of the recess 22C2 as viewed from the first direction is circular. The diameter of the recess 22C2 (the diameter of the circle as viewed from the first direction) is substantially the same as the diameter of the main body 31 (thin wall portion) of the tubular holder 30.

The recess 22C1 has a shape recessed from a bottom surface of the recess 22C2, and the shape of the recess 22C1 as viewed from the first direction is circular. The diameter of the recess 22C1 (the diameter of the circle as viewed from the first direction) is substantially the same as the diameter of the stator magnet 52.

The first case member 21 and the second case member 22 are disposed side by side in the first direction such that faces in which the recesses 21C0 and 22C0 open are opposed to each other, and the first case member 21 and the second case member 22 are connected.

Thus, the tubular case 20 has an internal space formed by the recesses 21C0, 21C1, and 21C2 formed in the first case member 21 and the recesses 22C0, 22C1, and 22C2 formed in the second case member 22. With this configuration, the tubular case 20 has stepped portions at both ends in the first direction.

A first opening 29 is provided at an end portion where the first case member 21 and the second case member 22 are connected, so as to include a dividing line that divides the tubular case 20 into the first case member 21 and the second case member 22. The first opening 29 communicates the internal space of the tubular case 20 with the outside.

The plurality of drive windings 61 and 62 are constituted by wound linear conductors coated with an insulating film. The plurality of drive windings 61 and 62 are wound on both sides with the flange portion 32 interposed therebetween on the outer periphery of the tubular holder 30.

More specifically, the drive winding 61 is disposed on the outer side surface SO31 on the first end surface E31 side with respect to the flange portion 32 in the main body 31 of the tubular holder 30. At this time, the drive winding 61 is disposed at a position separated from the first end surface E31 by a predetermined distance.

The drive winding 62 is disposed on the outer side surface SO31 on the second end surface E32 side with respect to the flange portion 32 in the main body 31 of the tubular holder 30. At this time, the drive winding 62 is disposed at a position separated from the second end surface E32 by a predetermined distance.

The height of the plurality of drive windings 61 and 62 in a circumferential direction is lower than the height of the flange portion 32. An annular shield member SH is disposed on the outer peripheral surfaces of the plurality of drive windings 61 and 62. The shield member SH is made of metal, and blocks a magnetic field radiated to the outside from the plurality of drive windings 61 and 62.

The stator magnet 51 is accommodated and disposed in the recess 21C1. The stator magnet 51 is disposed such that the S-pole surface S51 is adjacent to and opposed to a bottom surface B211 of the recess 21C1. The stator magnet 51 is fixed in the recess 21C1 by an adhesive or the like. The depth of the recess 21C1 is smaller than the height of the stator magnet 51, and thus the stator magnet 51 is fixed in a state in which a part in the height direction protrudes from the recess 21C1.

The stator magnet 52 is accommodated and disposed in the recess 22C1. The stator magnet 52 is disposed such that the N-pole surface N52 is adjacent to and opposed to a bottom surface B221 of the recess 22C1. The stator magnet 52 is fixed in the recess 22C1 by an adhesive or the like. The depth of the recess 22C1 is smaller than the height of the stator magnet 52, and thus the stator magnet 52 is fixed in a state in which a part in the height direction protrudes from the recess 22C1.

An end portion on the first end surface E31 side in the tubular holder 30 accommodating the mover magnet 40 is accommodated and disposed in the recess 21C2. At this time, the first end surface E31 abuts against a bottom surface B212 of the recess 21C2. The outer side surface SO31 of the end portion (thin wall portion) on the first end surface E31 side in the tubular holder 30 abuts against a side surface S212 of the recess 21C2. The outer side surface SO31 of the end portion (thin wall portion) on the first end surface E31 side in the tubular holder 30 abuts against the outer peripheral surface of the stator magnet 51.

An end portion on the second end surface E32 side in the tubular holder 30 accommodating the mover magnet 40 is accommodated and disposed in the recess 22C2. At this time, the second end surface E32 abuts against a bottom surface B222 of the recess 22C2. The outer side surface SO31 of the end portion (thin wall portion) on the second end surface E32 side in the tubular holder 30 abuts against a side surface S222 of the recess 22C2. The outer side surface SO31 of the end portion (thin wall portion) on the second end surface E32 side in the tubular holder 30 abuts against the outer peripheral surface of the stator magnet 52.

With such a configuration, the two stator magnets 51 and 52 are disposed at respective ends of the tubular holder 30 with the mover magnet 40 interposed therebetween, so as to generate magnetic forces repelling the mover magnet 40, in a first direction which is a movable direction of the mover magnet 40. Accordingly, the vibration motor 10 can realize a magnetic-spring type actuator by causing a drive current to flow through the drive windings 61 and 62.

Further, with such a configuration, both ends of the tubular holder 30 accommodating the mover magnet 40 become thin wall portions, and the plurality of drive windings 61 and 62 are disposed on these portions. Thus, a distance between the mover magnet 40 and the plurality of drive windings 61 and 62 is shortened, and the vibration motor 10 can increase acceleration of the mover magnet 40.

Further, the main body 31 (thin wall portion) of the tubular holder 30 is disposed in the recesses 21C1 and 22C1 of the tubular case 20. At this time, the outer side surface SO31 of the main body 31 (thin wall portion) of the tubular holder 30 abuts against the side surfaces S212 and S222 of the recesses 21C2 and 22C2 of the tubular case 20, and the inner side surface SI30 of the tubular holder 30 is in contact with the outer peripheral surfaces of the stator magnets. Thus, the tubular holder 30 is fixed to the tubular case 20 in a state in which deformation is difficult. Accordingly, the tubular holder 30 is less likely to be deformed by sliding of the mover magnet 40 in the first direction, and the vibration motor 10 can suppress degradation of characteristics as a vibration motor and can suppress noise.

As described above, the vibration motor 10 can suppress enlargement of the shape while suppressing degradation of characteristics as a vibration motor and suppressing noise.

Ends of the drive windings 61 and 62 are led out to the outside of the tubular case 20 through the first opening 29, and are connected to a circuit board (for example, a flexible circuit board) disposed outside the tubular case 20. An outer electrode ET of the vibration motor 10 is constituted by the circuit board. The lead-out structure for the drive windings 61 and 62 to the outside of the tubular case 20 is not limited thereto, and a through hole may be formed at an appropriate position of the tubular case 20 and the drive windings 61 and 62 may be led out through the through hole. Further, a configuration may be employed in which terminal pins are inserted into the through hole and the drive windings 61 and 62 are connected to terminal pins inside the tubular case 20.

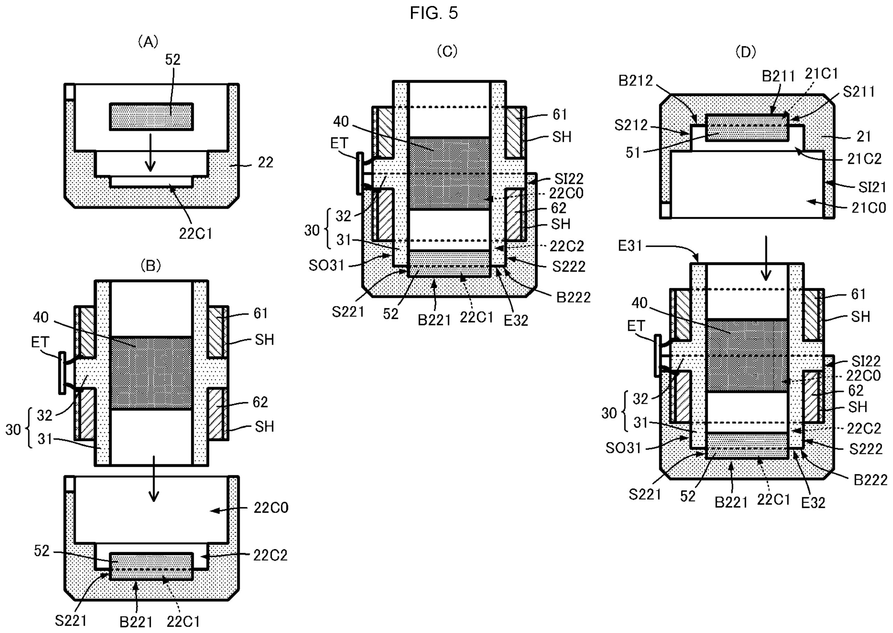

Figs. 5(A), 5(B), 5(C), and 5(D) are side sectional views illustrating states in respective steps in an example of a method for manufacturing the vibration motor according to the first embodiment.

First, as illustrated in Fig. 5(A), an adhesive is applied to the recess 22C1 of the second case member 22 of the tubular case 20, and the stator magnet 52 is disposed and fixed. Although not illustrated in the drawings, an adhesive is also applied to the recess 21C1 of the first case member 21 of the tubular case 20, and the stator magnet 51 is disposed and fixed.

Next, as illustrated in Fig. 5(B), the mover magnet 40 is accommodated in the through hole 300 of the tubular holder 30, and the tubular holder 30 is inserted into the second case member 22 of the tubular case 20. At this time, the tubular holder 30 is inserted into the second case member 22 such that the end portion on the second end surface E32 side of the tubular holder 30 is accommodated in the recess 22C2, and a portion of the stator magnet 52 protruding from the recess 22C1 is accommodated in the through hole 300.

Thus, as illustrated in Fig. 5(C), the tubular holder 30 accommodating the mover magnet 40 is fixed to the tubular case 20 to which the stator magnet 51 is fixed.

Next, as illustrated in Fig. 5(D), the first case member 21 of the tubular case 20 to which the stator magnet 51 is fixed is placed over the tubular holder 30. At this time, the first case member 21 is placed over the tubular holder 30 such that the end portion on the first end surface E31 side of the tubular holder 30 is accommodated in the recess 21C2, and a portion of the stator magnet 51 protruding from the recess 21C1 is accommodated in the through hole 300.

The first case member 21 and the second case member 22 are fixed, and the vibration motor 10 is formed.

In such a manufacturing method, the recess 22C1 can be used for positioning of the stator magnet 52, and the recess 21C1 can be used for positioning of the stator magnet 51. Further, the recesses 22C2 and 21C2 can be used for positioning of the tubular holder 30. Thus, assembly can be easily performed while accurately maintaining positional relationships among respective components of the vibration motor 10.

### [Second Embodiment]

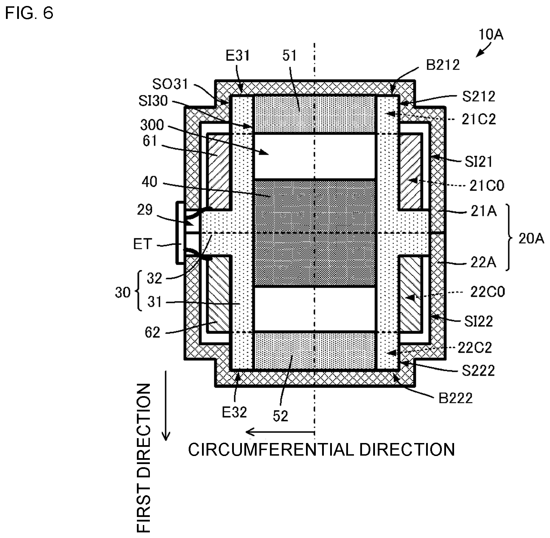

A vibration motor according to a second embodiment of the present invention will be described with reference to the drawings. Fig. 6 is a side sectional view of the vibration motor according to the second embodiment.

As illustrated in Fig. 6, a vibration motor 10A according to the second embodiment differs from the vibration motor 10 according to the first embodiment in that the vibration motor 10A includes a tubular case 20A. Other configurations of the vibration motor 10A according to the second embodiment are similar to those of the vibration motor 10 according to the first embodiment, and descriptions of similar portions will be omitted.

The vibration motor 10A includes the tubular case 20A. The tubular case 20A includes a first case member 21A and a second case member 22A. The first case member 21A and the second case member 22A are made of metal. The basic shape of the first case member 21A is similar to the basic shape of the second case member 22A.

The first case member 21A includes the recesses 21C0 and 21C2. In other words, the first case member 21A has a shape similar to the first case member 21 according to the first embodiment, except that the first case member 21A does not include the recess 21C1.

The second case member 22A includes the recesses 22C0 and 22C2. In other words, the second case member 22A has a shape similar to the second case member 22 according to the first embodiment, except that the second case member 22A does not include the recess 22C1.

The stator magnet 51 and an end portion on the first end surface E31 side of the tubular holder 30 are accommodated in the recess 21C2. The outer peripheral surface of the stator magnet 51 abuts against the inner side surface SI30 of the tubular holder 30. The outer side surface SO31 of the tubular holder 30 abuts against the side surface S212 of the recess 21C2. The stator magnet 51 is attracted to the bottom surface B211 of the recess 21C2 by magnetic force.

The stator magnet 52 and an end portion on the second end surface E32 side of the tubular holder 30 are accommodated in the recess 22C2. The outer peripheral surface of the stator magnet 52 abuts against the inner side surface SI30 of the tubular holder 30. The outer side surface SO31 of the tubular holder 30 abuts against the side surface S222 of the recess 22C2. The stator magnet 52 is attracted to the bottom surface B221 of the recess 22C2 by magnetic force.

With such a configuration, the vibration motor 10A can achieve effects similar to those of the vibration motor 10.

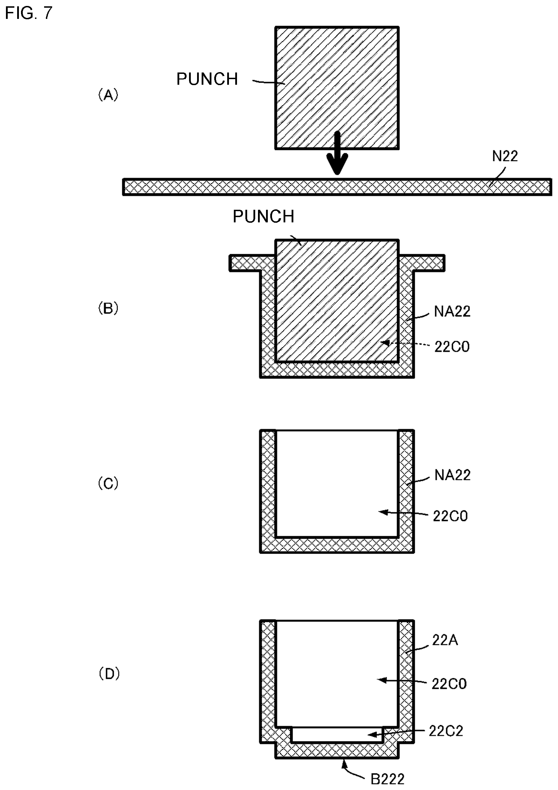

The first case member 21A and the second case member 22A having such shapes are manufactured as follows. Figs. 7(A), 7(B), 7(C), and 7(D) are side sectional views illustrating manufacturing steps of a second case member according to the second embodiment. In Figs. 7(A), 7(B), 7(C), and 7(D), manufacturing steps of the second case member 22A are illustrated, and the first case member 21A is also manufactured in a similar manner.

First, as illustrated in Fig. 7(A), a flat plate N22 is prepared, a punch having an outer shape corresponding to the shape of the recess 22C0 is pressed against the flat plate N22, and drawing is performed. Thus, as illustrated in Fig. 7(B), an intermediate member NA22 of the second case member 22A having the recess 22C0 is formed.

Next, as illustrated in Fig. 7(C), an excess portion is removed. Then, a punch having an outer shape corresponding to the shape of the recess 22C2 is pressed against the bottom wall of the intermediate member NA22, and drawing is performed.

The second case member 22A can be manufactured by such a manufacturing method.

### [Third Embodiment]

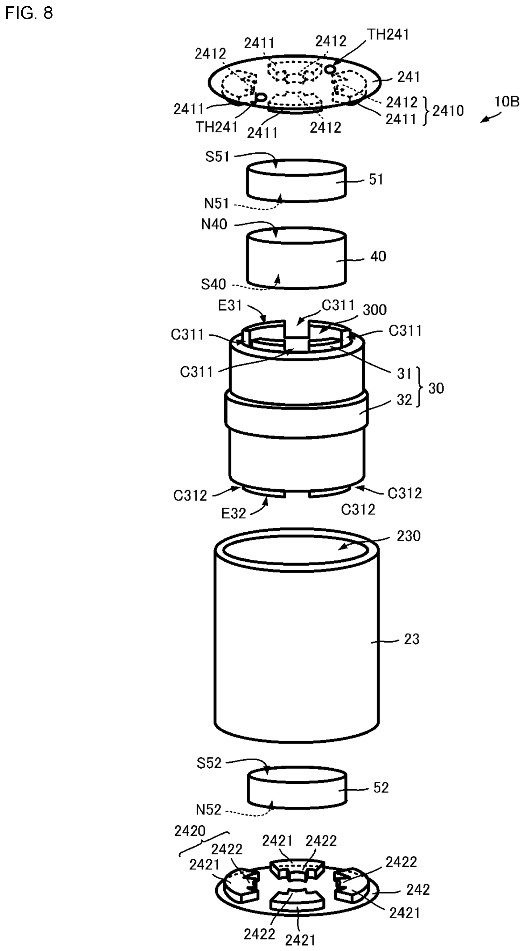

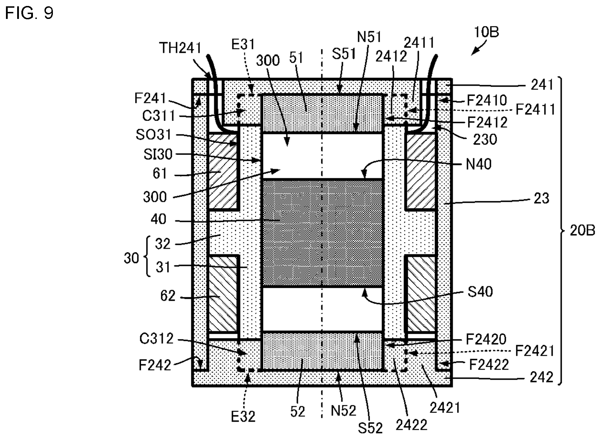

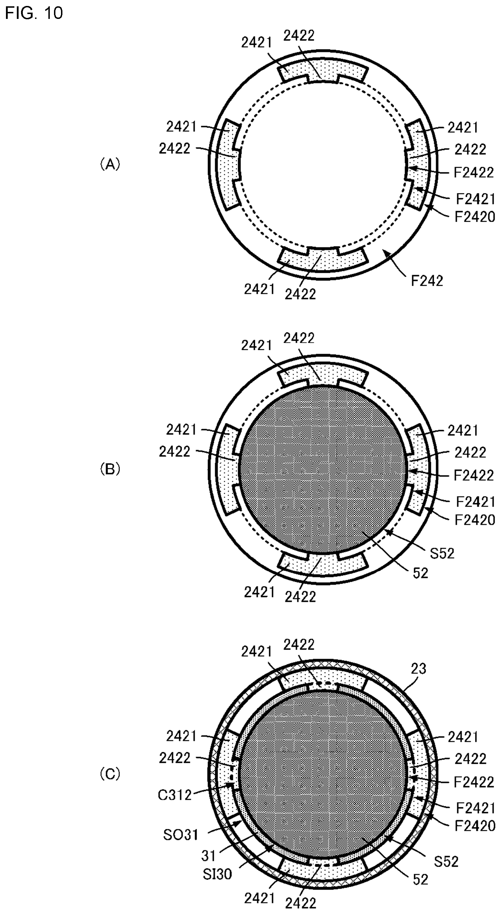

A vibration motor according to a third embodiment of the present invention will be described with reference to the drawings. Fig. 8 is an exploded perspective view of the vibration motor according to the third embodiment. Fig. 9 is a side sectional view of the vibration motor according to the third embodiment. Figs. 10(A), 10(B), and 10(C) are plan views illustrating disposition modes of a stator magnet, a tubular holder, and a main body portion with respect to a second lid member.

As illustrated in Figs. 8 and 9, a vibration motor 10B according to the third embodiment differs from the vibration motor 10 according to the first embodiment in configuration of a tubular case 20B and in that the tubular holder 30 includes fitting recesses C311 and C312. Other configurations of the vibration motor 10B according to the second embodiment are similar to those of the vibration motor 10 according to the first embodiment, and descriptions of similar portions will be omitted.

The tubular holder 30 includes a plurality of fitting recesses C311 recessed in the first direction from the first end surface E31. The plurality of fitting recesses C311 are formed at equal intervals in a direction in which a ring forming the first end surface E31 extends.

The tubular holder 30 includes a plurality of fitting recesses C312 recessed in the first direction from the second end surface E32. The plurality of fitting recesses C312 are formed at equal intervals in a direction in which a ring forming the second end surface E32 extends.

The tubular case 20B includes a main body portion 23, a first lid member 241, and a second lid member 242. The main body portion 23, the first lid member 241, and the second lid member 242 are made of metal. The main body portion 23, the first lid member 241, and the second lid member 242 need not be made only of metal, as long as the main body portion 23, the first lid member 241, and the second lid member 242 are made of a material that blocks a magnetic field.

The main body portion 23 has a cylindrical shape and includes a through hole 230. The first lid member 241 is disposed at one end of the main body portion 23 in the first direction and closes one opening of the through hole 230. The second lid member 242 is disposed at the other end of the main body portion 23 in the second direction and closes the other opening of the through hole 230.

The first lid member 241 includes a plurality of protrusions 2410 protruding from a surface F241 on a side where the first lid member 241 is disposed on the main body portion 23. The plurality of protrusions 2410 are formed by half-blanking the first lid member 241 having a plate shape.

The plurality of protrusions 2410 are formed in the shape (an arc shape) in which an annular protrusion is partially missing. The plurality of protrusions 2410 are formed at substantially equal angular intervals with reference to the center of the first lid member 241 as viewed in the first direction as a reference point.

Each of the plurality of protrusions 2410 includes a first portion 2411 and a second portion 2412. The height of the first portion 2411 and the height of the second portion 2412 are the same. The first portion 2411 has an arc shape as viewed in the first direction, and includes a first outer peripheral surface F2410 and a first inner peripheral surface F2411. The diameter of a circle constituted by the plurality of first outer peripheral surfaces F2410 is substantially the same as the diameter of the inner surface on the through hole 230 side of the main body portion 23. The diameter of a circle constituted by the plurality of first inner peripheral surfaces F2411 is substantially the same as the diameter of the outer side surface SO31 of the tubular holder 30.

The second portion 2412 has a shape protruding from the first inner peripheral surface F2411 of the first portion 2411 toward the center side of the circle constituted by the plurality of first portions 2411. The second portion 2412 includes a second inner peripheral surface F2412 at a protruding distal end. The diameter of a circle constituted by the plurality of second inner peripheral surfaces F2412 is substantially the same as the diameter of the stator magnet 51.

An arc length of the second portion 2412 is shorter than an arc length of the first portion 2411. The center in a direction in which an arc of the second portion 2412 extends and the center in a direction in which an arc of the first portion 2411 extends are substantially the same.

The first lid member 241 further includes a through hole TH241. The through hole TH241 is formed at a position that does not overlap the plurality of protrusions 2410. The through hole TH241 corresponds to a "second opening" of the present invention.

The second lid member 242 has a configuration similar to that of the first lid member 241, except that no through hole is formed.

Specifically, the second lid member 242 includes a plurality of protrusions 2420 protruding from a surface F242 on a side where the second lid member 242 is disposed on the main body portion 23. The plurality of protrusions 2420 are formed by half-blanking the second lid member 242 having a plate shape.

The plurality of protrusions 2420 are formed in the shape (an arc shape) in which an annular protrusion is partially missing. The plurality of protrusions 2420 are formed at substantially equal angular intervals with reference to the center of the second lid member 242 as viewed in the first direction as a reference point.

Each of the plurality of protrusions 2420 includes a first portion 2421 and a second portion 2422. The height of the first portion 2421 and the height of the second portion 2422 are the same. The first portion 2421 has an arc shape as viewed in the first direction, and includes a first outer peripheral surface F2420 and a first inner peripheral surface F2421. The diameter of a circle constituted by the plurality of first outer peripheral surfaces F2420 is substantially the same as the diameter of the inner surface on the through hole 230 side of the main body portion 23. The diameter of a circle constituted by the plurality of first inner peripheral surfaces F2421 is substantially the same as the diameter of the outer side surface SO31 of the tubular holder 30.

The second portion 2422 has a shape protruding from the first inner peripheral surface F2421 of the first portion 2421 toward the center side of a circle constituted by the plurality of second portions 2422. The second portion 2422 includes a second inner peripheral surface F2422 at a protruding distal end. The diameter of a circle constituted by the plurality of second inner peripheral surfaces F2422 is substantially the same as the diameter of the stator magnet 52.

An arc length of the second portion 2422 is shorter than an arc length of the first portion 2421. The center in a direction in which an arc of the second portion 2422 extends and the center in a direction in which an arc of the first portion 2421 extends are substantially the same.

The tubular holder 30 in which the mover magnet 40 is accommodated and on which the plurality of drive windings 61 and 62 are disposed, and the plurality of stator magnets 51 and 52 are disposed in an internal space surrounded by the main body portion 23, the first lid member 241, and the second lid member 242.

More specifically, the stator magnet 51 is disposed in a space surrounded by the plurality of second portions 2412 in the plurality of protrusions 2410 of the first lid member 241. A main surface (circular surface) of the stator magnet 51 abuts against the surface F241 of the first lid member 241. A peripheral surface of the stator magnet 51 abuts against the second inner peripheral surfaces F2412 of the plurality of second portions 2412.

The stator magnet 52 is disposed in a space surrounded by the plurality of second portions 2422 in the plurality of protrusions 2420 of the second lid member 242. A main surface (circular surface) of the stator magnet 52 abuts against the surface F242 of the second lid member 242. A peripheral surface of the stator magnet 52 abuts against the second inner peripheral surfaces F2422 of the plurality of second portions 2422.

The tubular holder 30 is disposed such that the first end surface E31 abuts against the surface F241 of the first lid member 241 and the plurality of fitting recesses C311 receive the second portions 2412 of the plurality of protrusions 2410. At this time, the outer side surface SO31 of the tubular holder 30 abuts against the first inner peripheral surface F2411 of the first portion 2411.

Further, the tubular holder 30 is disposed such that the second end surface E32 abuts against the surface F242 of the second lid member 242 and the plurality of fitting recesses C312 receive the second portions 2422 of the plurality of protrusions 2420. At this time, the outer side surface SO31 of the tubular holder 30 abuts against the first inner peripheral surface F2421 of the first portion 2421.

With such a configuration, the vibration motor 10B achieves effects similar to those of the vibration motor 10.

Further, in the vibration motor 10B, the plurality of fitting recesses C311 of the tubular holder 30 receive the second portions 2412 of the plurality of protrusions 2410, and the plurality of fitting recesses C312 receive the second portions 2422 of the plurality of protrusions 2420, thereby inhibiting rotation of the tubular holder 30.

Further, in the vibration motor 10B, since the tubular case 20B is made of metal, the shield member SH illustrated in the first embodiment can be omitted. Thus, the vibration motor 10B can increase the number of turns of the drive windings 61 and 62 with a size equivalent to that of the vibration motor 10.

Further, in the vibration motor 10B, ends of the drive windings 61 and 62 are led out to the outside of the tubular case 20B through the through hole TH241. Thus, the vibration motor 10B can lead out ends of the drive windings 61 and 62 from an end surface of the tubular case 20B.

In the present embodiment, the number of the plurality of protrusions 2410 and the number of the plurality of protrusions 2420 are four, but the numbers are not limited thereto.

### [Fourth Embodiment]

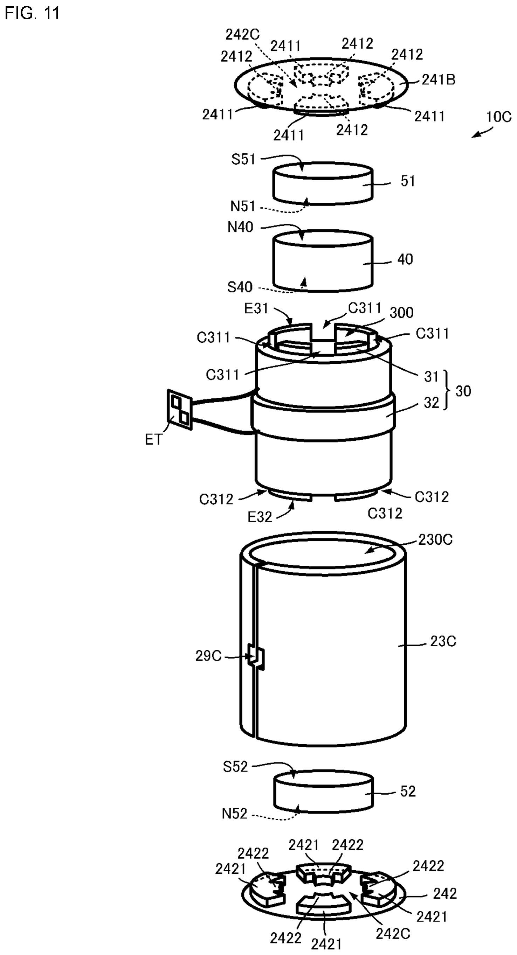

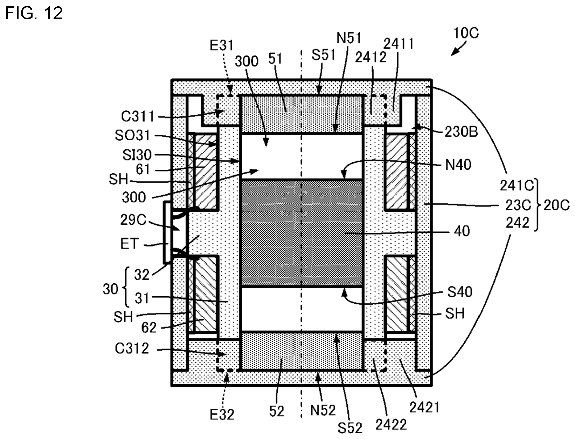

A vibration motor according to a fourth embodiment of the present invention will be described with reference to the drawings. Fig. 11 is an exploded perspective view of the vibration motor according to the fourth embodiment. Fig. 12 is a side sectional view of the vibration motor according to the fourth embodiment.

As illustrated in Figs. 11 and 12, a vibration motor 10C according to the fourth embodiment differs from the vibration motor 10B according to the third embodiment in a configuration of a tubular case 20C. Other configurations of the vibration motor 10C according to the fourth embodiment are similar to those of the vibration motor 10B according to the third embodiment, and descriptions of similar portions will be omitted.

The tubular case 20C includes a main body portion 23C, a first lid member 241C, and the second lid member 242. The first lid member 241C has a configuration in which the through hole TH241 is omitted from the first lid member 241 according to the second embodiment.

The main body portion 23C is a plate member having an annular shape in which one end and the other end are close to each other as viewed from the first direction, and having a peripheral surface in an extending direction. In other words, the main body portion 23C has a shape in which a flat plate member is bent into a cylindrical shape and both ends are brought close to or connected to each other.

Notches 29C are formed at both ends. A through hole 230C, which is a space inside the main body portion 23C, communicates with an outside space through the notches 29C.

The tubular holder 30 in which the mover magnet 40 is accommodated and on which the plurality of drive windings 61 and 62 are disposed, a part of the stator magnet 51, and a part of the stator magnet 52 are accommodated in the through hole 230C of the main body portion 23C.

Ends of the drive windings 61 and 62 are led out to the outside of the tubular case 20C through the notches 29C, and are connected to a circuit board (for example, a flexible circuit board) disposed outside the tubular case 20C. The outer electrode ET of the vibration motor 10C is constituted by the circuit board.

The configurations of the above-described embodiments can be combined as appropriate, and effects according to respective combinations can be achieved.
<1> A vibration motor including:
   one mover magnet;
   a tubular holder having a through hole having both end portions open, the mover magnet being housed in the through hole, the tubular holder having a flange portion at a central portion of an outer side surface thereof;
   drive windings wound on both sides of the flange portion on an outer periphery of the tubular holder;
   a tubular case accommodating the tubular holder and the drive windings; and
   two stator magnets disposed at respective ends of the tubular holder with the mover magnet interposed therebetween so as to generate magnetic forces repelling the mover magnet, in a first direction which is a movable direction of the mover magnet, in which
   at least a part of each of the two stator magnets is housed in the tubular holder,
   the tubular case includes stepped portions facing the respective end portions of the tubular holder, and
   the tubular holder is disposed in the tubular case in a state in which the end portions are in contact with side surfaces of the respective stepped portions in a radial direction of the through hole.
<2> The vibration motor according to claim 1, in which
   the tubular case includes a first case member and a second case member divided using a dividing line in a plane orthogonal to the first direction,
   the tubular case has a first opening in a side wall including the dividing line, and
   the drive windings are led out from the first opening.
<3> The vibration motor according to claim 1, in which
   the tubular case includes
      a main body portion having both ends in an extending direction open, and
      two lid members disposed at the respective ends of the main body portion,
   one of the lid members has a second opening, and
   the drive windings are led out from the second opening.
<4> The vibration motor according to claim 3, in which
   each of the lid members includes a protrusion that has an annular shape, the protrusion having a shape protruding from a surface on a side where the lid member is disposed on the main body portion, and
   in plan view of the lid member, the protrusion having the annular shape has a shape along an outer shape of a corresponding one of the stator magnets and an outer shape of the tubular case.
<5> The vibration motor according to claim 4, in which
   the protrusion includes
      a first portion having a first inner peripheral surface along the outer shape of the tubular case, and
      a second portion having a second inner peripheral surface along the outer shape of the stator magnet,
   the first portion and the second portion have a shape divided into a plurality of portions in a circumferential direction of the annular shape, and
   a length in the circumference direction of the plurality of second portions is shorter than a length in the circumference direction of the plurality of first portions.
<6> The vibration motor according to claim 5, in which
   the tubular case includes a plurality of fitting recesses at end portions in an extending direction, and
   the plurality of fitting recesses of the tubular case receive the first portions.
<7> The vibration motor according to claim 1, in which
   the tubular case includes
      a main body portion having both ends in an extending direction open, and
      two lid members disposed at the respective ends of the main body portion,
   the main body portion is a plate member having an annular shape in which one end and another end thereof are close to each other and having a peripheral surface parallel to the extending direction,
   the peripheral surface includes a notch portion through which an inside and an outside of the main body portion communicate, and
   the drive windings are led out from the notch portion.

### Reference Signs List

10, 10A, 10B, 10C vibration motor
20, 20A, 20B, 20C tubular case
21, 21A first case member
22, 22A second case member
21C0, 21C1, 21C2, 22C0, 22C1, 22C2 recess
23, 23C main body portion
29 first opening
29C notch portion
30 tubular holder
31 main body
32 flange portion
40 mover magnet
51, 52 stator magnet
61, 62 drive winding
230, 230C through hole
TH241 through hole
241, 241C first lid member
242 second lid member
300 through hole
2410, 2420 protrusion
2411, 2421 first portion
2412, 2422 second portion
B211, B212, B221, B222 bottom surface
C311, C312 fitting recess
E31 first end surface
E32 second end surface
ET outer electrode
F241, F242 surface
F2410, F2420 first outer peripheral surface
F2411, F2421 first inner peripheral surface
F2412, F2422 second inner peripheral surface
S212, S222 side surface
N40, N51, N52 N-pole surface
S40, S51, S52 S-pole surface
SH shield member
SI30 inner side surface
SO31 outer side surface
TH241 through hole

## Claims

1. A vibration motor comprising:
one mover magnet;
a tubular holder having a through hole having both end portions open, the mover magnet being housed in the through hole, the tubular holder having a flange portion at a central portion of an outer side surface thereof;
drive windings wound on both sides of the flange portion on an outer periphery of the tubular holder;
a tubular case accommodating the tubular holder and the drive windings; and
two stator magnets disposed at respective ends of the tubular holder with the mover magnet interposed therebetween so as to generate magnetic forces repelling the mover magnet, in a first direction which is a movable direction of the mover magnet, wherein
at least a part of each of the two stator magnets is housed in the tubular holder,
the tubular case includes stepped portions facing the respective end portions of the tubular holder, and
the tubular holder is disposed in the tubular case in a state in which the end portions are in contact with side surfaces of the respective stepped portions in a radial direction of the through hole.

2. The vibration motor according to claim 1, wherein
the tubular case includes a first case member and a second case member divided using a dividing line in a plane orthogonal to the first direction,
the tubular case has a first opening in a side wall including the dividing line, and
the drive windings are led out from the first opening.

3. The vibration motor according to claim 1, wherein
the tubular case includes
a main body portion having both ends in an extending direction open, and
two lid members disposed at the respective ends of the main body portion,
one of the lid members has a second opening, and
the drive windings are led out from the second opening.

4. The vibration motor according to claim 3, wherein
each of the lid members includes a protrusion that has an annular shape, the protrusion having a shape protruding from a surface on a side where the lid member is disposed on the main body portion, and
in plan view of the lid member, the protrusion having the annular shape has a shape along an outer shape of a corresponding one of the stator magnets and an outer shape of the tubular case.

5. The vibration motor according to claim 4, wherein
the protrusion includes
a first portion having a first inner peripheral surface along the outer shape of the tubular case, and
a second portion having a second inner peripheral surface along the outer shape of the stator magnet,
the first portion and the second portion have a shape divided into a plurality of portions in a circumferential direction of the annular shape, and
a length in the circumference direction of the plurality of second portions is shorter than a length in the circumference direction of the plurality of first portions.

6. The vibration motor according to claim 5, wherein
the tubular case includes a plurality of fitting recesses at end portions in an extending direction, and
the plurality of fitting recesses of the tubular case receive the first portions.

7. The vibration motor according to claim 1, wherein
the tubular case includes
a main body portion having both ends in an extending direction open, and
two lid members disposed at the respective ends of the main body portion,
the main body portion is a plate member having an annular shape in which one end and another end thereof are close to each other and having a peripheral surface parallel to the extending direction,
the peripheral surface includes a notch portion through which an inside and an outside of the main body portion communicate, and
the drive windings are led out from the notch portion.
